# EUROPÄISCHE PATENTANMELDUNG

(11) **EP 3 925 735 A1**
(43) Veröffentlichungstag der Anmeldung: **22.12.2021**
(21) Anmeldenummer: 20180460.6
(22) Anmeldetag: 17.06.2020
(51) Int. Cl.: B25D 17/02

(54) **WERKZEUG UND SYSTEM**

(71) Anmelder: Hilti Aktiengesellschaft, 9494 Schaan (LI)
(72) Erfinder: Hauptmann, Udo, 86899 Landsberg (DE); Appel, Hans, 81377 Muenchen (DE)
(74) Vertreter: Hilti Aktiengesellschaft Corporate Intellectual Property

(57) **Zusammenfassung**

Die Erfindung betrifft ein Werkzeug (16), beispielsweise ein Bohrwerkzeug, ein Bohrmeißelwerkzeug und/oder ein Meißelwerkzeug, umfassend einen Einsteckabschnitt (18) zur Aufnahme des Werkzeugs (16) in einer Werkzeugaufnahme (14) einer Werkzeugmaschine (12), insbesondere einer Handwerkzeugmaschine, wobei der Einsteckabschnitt (18) wenigstens eine Nut (20) aufweist. Sie ist dadurch gekennzeichnet, dass am Einsteckabschnitt (18) wenigstens eine Materialaufnahme (24) ausgebildet ist. Die Erfindung betrifft des Weiteren ein System (10), umfassend eine Werkzeugmaschine (12) und ein Werkzeug (16). Das erfindungsgemäße Werkzeug (16) und das erfindungsgemäße System (10) zeichnen sich durch einen geringen Verschleiß und damit durch eine hohe Langlebigkeit aus.

## Beschreibung

Die vorliegende Erfindung betrifft ein Werkzeug, beispielsweise ein Bohrwerkzeug, ein Bohrmeißelwerkzeug und/oder ein Meißelwerkzeug, umfassend einen Einsteckabschnitt zur Aufnahme des Werkzeugs in einer Werkzeugaufnahme einer Werkzeugmaschine, insbesondere einer Handwerkzeugmaschine, wobei der Einsteckabschnitt wenigstens eine Nut aufweist.

Durch die Nut lässt sich das in der Werkzeugaufnahme aufgenommene Werkzeug führen. Auch können mittels der Nut und/oder mittels an die Nut angrenzenden Wänden Drehmomente von der Werkzeugmaschine über deren Werkzeugaufnahme auf das Werkzeug übertragen werden.

Eine solche Drehmomentübertragung erfolgt beispielsweise bei Bohr- und Meißelwerkzeugen während eines Hammerbohrens, wenn sich die Werkzeugmaschine in einem sogenannten Arbeitspunkt befindet, das heißt, wenn ein Bohrkopf des Werkzeugs einen Untergrund kontaktiert und bearbeitet.

Insbesondere wenn hohe Drehmomente zu übertragen sind, beispielsweise um tiefe Bohrlöcher und/oder Bohrlöcher mit einem sehr großen Durchmesser zu erzeugen, kann es zu sehr starken Flächenpressungen im Bereich von Kontaktflächen zwischen der Werkzeugaufnahme und dem darin aufgenommenen Einsteckabschnitt des Werkzeugs kommen.

Häufig kommt es dadurch zu einem starken Verschleiß des Einsteckabschnitts.

Aufgabe der vorliegenden Erfindung ist es daher, ein Werkzeug als auch ein System aus einer Werkzeugmaschine und einem Werkzeug anzubieten, die sich durch einen besonders geringen Verschleiß auszeichnen.

Gelöst wird die Aufgabe durch ein Werkzeug, beispielsweise ein Bohrwerkzeug, ein Bohrmeißelwerkzeug und/oder ein Meißelwerkzeug, umfassend einen Einsteckabschnitt zur Aufnahme des Werkzeugs in einer Werkzeugaufnahme einer Werkzeugmaschine, insbesondere einer Handwerkzeugmaschine, wobei der Einsteckabschnitt wenigstens eine Nut aufweist, wobei am Einsteckabschnitt wenigstens eine Materialaufnahme ausgebildet ist.

Dabei liegt der Erfindung die Erkenntnis zugrunde, dass zur Verringerung des eingangs beschriebenen Verschleißes ein im Bereich der Kontaktflächen befindliches Schmiermittel den Reibungswiderstand deutlich verringern könnte.

In der Vergangenheit schlugen jedoch Versuche, Schmiermittel in ausreichender Menge in diesen Bereich einzubringen, beispielsweise durch Einfetten des Einsteckabschnitts vor Einbringen des Einsteckabschnitts in die Werkzeugaufnahme, weitgehend fehl. Denn aufgrund der hohen Flächenpressungen wird das Schmiermittel spätestens nach kurzem Betrieb des in der Werkzeugaufnahme aufgenommenen Werkzeugs aus dem Bereich der Kontaktflächen herausgedrängt, wodurch es dann anschließend wiederum zu einem erhöhten Reibungswiderstand und damit zu entsprechendem Verschleiß kommt.

Hier greift die Erfindung ein, indem die Materialaufnahme dem Schmiermittel zusätzlichen Raum zur Verfügung stellen kann. Aus der Materialaufnahme kann das Schmiermittel durch die Flächenpressungen zumindest nicht vollständig herausgedrängt werden, sodass sich der reibungsmindernde Effekt des Schmiermittels dauerhaft entfalten kann und sich der Verschleiß dauerhaft mindern lässt.

Die Erfindung ermöglicht es insbesondere, sowohl einen Adhäsions- als auch einen Abrasivverschleiß zu reduzieren oder gar zu vermeiden.

Weiter lässt sich durch die Erfindung ein ungewolltes Festsitzen des Einsteckabschnitts in der Werkzeugaufnahme reduzieren oder gar vermeiden. Insbesondere kann das Risiko eines Verschweißens des Einsteckabschnitts mit der Werkzeugaufnahme, beispielsweise nach Art eines Reibschweißens, verringert oder vermieden werden.

Häufig sind die Werkzeugaufnahme oder zumindest ein Teil der Werkzeugaufnahme, insbesondere im werkzeugaufnahmeseitigen Bereich der Kontaktflächen, durch eine Räumoperation hergestellt. Fertigungsbedingt ist dadurch der Freiraum, in den ein Schmiermittel einbringbar sein könnte, zwischen dem Einsteckabschnitt und der Werkzeugaufnahme in diesem Bereich normalerweise verhältnismäßig klein. Zudem können durch die Räumoperation Räumkanten an der Werkzeugaufnahme ausgebildet sein. Diese Räumkanten hatten bisher das Herausdrängen von Schmiermittel aus dem Bereich der Kontaktflächen weiter begünstigt. Daher empfiehlt sich die erfindungsgemäße Materialaufnahme, die diesen unerwünschten Auswirkungen des bislang typischen Herstellverfahrens entgegenwirken kann, zusätzlich.

Auch kann die Reibung vermindert werden, wenn die Materialaufnahme alternativ oder ergänzend eingerichtet ist, Abriebmaterial, Aufwurfmaterial und/oder sonstiges, im Bereich der Kontaktflächen befindliches, Restmaterial aufzunehmen. Derartiges Aufwurfmaterial kann sich beispielsweise durch auf die Wände der wenigstens einen Nut einwirkende Kräfte und/oder Drehmomente ausbilden. Derartiges Aufwurfmaterial verringert bislang oftmals den Freiraum zwischen dem Einsteckabschnitt und der Werkzeugaufnahme, insbesondere kommt es bislang oftmals zu einem Materialkontakt in diesem Bereich, der wiederum häufig zu einer Reibverschweißung führt. Die Materialaufnahme bietet dagegen Raum zur Aufnahme solchen, insbesondere raumgreifenden, Materials. Insbesondere lässt sich durch die Materialaufnahme Aufwurfmaterial aus dem für die Reibung kritischen Kontaktbereich entfernen. In der Materialaufnahme kann solches Material, zumindest bis zu einer späteren Entnahme des Werkzeugs aus der Werkzeugaufnahme, zwischenlagerbar sein.

Die Materialaufnahme kann in der Nähe der Nut und/oder außerhalb der Nut ausgebildet und/oder angeordnet sein.

Das Werkzeug kann eine längliche Form aufweisen. Auch die Materialaufnahme kann eine längliche Form aufweisen.

Besonders bevorzugt kann die Materialaufnahme radial umlaufend oder zumindest abschnittsweise und gleichmäßig über einen Umfang des Einsteckabschnitts verteilt am Einsteckabschnitt ausgebildet sein. Denkbar ist insbesondere, dass die Materialaufnahme höchstens fünf, sich, insbesondere gleichmäßig, über den Umfang des Einsteckabschnitts hinweg verteilte Abschnitte aufweist.

Die Materialaufnahme kann als Schmiermitteldepot ausgebildet sein und/oder ein Schmiermitteldepot aufweisen. Dazu kann in der Materialaufnahme ein Schmiermittel aufgenommen sein. Alternativ oder ergänzend kann die Materialaufnahme eingerichtet sein, ein Schmiermittel aufzunehmen.

Die Materialaufnahme kann als Ausnehmung am Werkzeug ausgebildet sein.

Um die Stabilität des Werkzeugs nicht zu beeinträchtigen und/oder um eine verlässliche Führung des Werkzeugs in der Werkzeugaufnahme zu gewährleisten, kann die Materialaufnahme eine maximale Tiefe von höchstens 0,5 mm, vorzugsweise eine maximale Tiefe im Bereich von 0,05 mm bis 0,5 mm, aufweisen.

Wenigstens einer der entlang einer Längsachse des Werkzeugs befindlichen Endbereiche der Materialaufnahme kann eine Fase aufweisen. Der Winkel der Fase kann zwischen 30° und 60°, besonders bevorzugt 45°, gegen die Längsachse betragen.

Denkbar ist auch, dass die Gestalt der Materialaufnahme derart ausgebildet ist, dass die Materialaufnahme bei Betrieb der Werkzeugmaschine die Werkzeugaufnahme der Werkzeugmaschine, in der das Werkzeug aufgenommen ist, nicht verlässt. Dazu können die Position und/oder die Größe der Materialaufnahme innerhalb des Werkzeugs entsprechend gewählt sein.

Die Materialaufnahme kann eingerichtet sein, eine Räumkontur der Werkzeugaufnahme, in der das Werkzeug aufgenommen ist, entlang der Längsachse wenigstens einenends, vorzugsweise beidenends, zumindest wenn sich die Werkzeugmaschine in ihrem Arbeitspunkt befindet, zu überragen.

Die Größe und/oder die Position der Materialaufnahme können insbesondere derart gewählt sein, dass die Materialaufnahme bei in der Werkzeugaufnahme aufgenommenem Werkzeug im Arbeitspunkt der Werkzeugmaschine zwischen 0,1 cm und 1 cm, bevorzugt mindestens 0,3 cm, vor der Räumkontur der Werkzeugaufnahme in von der Werkzeugmaschine wegweisender Richtung, also in Richtung auf einen Werkzeugkopf bzw. ein Arbeitsende des Werkzeugs hin, beginnt. Sie kann zwischen 0,1 cm und 1 cm, bevorzugt 0,5 cm, hinter der Räumkontur, also in Richtung zur übrigen Werkzeugmaschine hin, enden.

Der Einsteckabschnitt kann einen Y-förmig ausgebildet Anschlussbereich aufweisen. Der Anschlussbereich kann dazu mehrere, insbesondere mindestens drei, Nuten aufweisen. Die wenigstens drei Nuten können nach Art eines Y ausgerichtet sein. Werkzeuge mit derartigen Y-förmigen Anschlussbereichen werden beispielsweise unter der Bezeichnung "SDS-Max" angeboten.

Werkzeugaufnahmen von Werkzeugmaschinen, mit denen derartige Werkzeuge verwendet werden können, werden häufig durch Räumen geformt. Die Drehmomentübertragung zwischen der Werkzeugaufnahme und dem Werkzeug kann beispielsweise über mindestens einen in der Werkzeugaufnahme ausgebildeten und/oder angeordneten Steg erfolgen. Vorzugsweise ist die wenigstens eine Nut des Einsteckabschnitts komplementär zu dem mindestens einen Steg ausgebildet.

Das Werkzeug, insbesondere der Einsteckabschnitt, kann zur werkzeuglosen Befestigung an und/oder in der Werkzeugaufnahme ausgebildet sein.

Das Schmiermittel kann ausgebildet sein, bei fehlender Belastung, insbesondere wenn das Werkzeug nicht in Benutzung ist, eine hohe Viskosität und/oder eine geringe Klebrigkeit aufzuweisen. Das Schmiermittel kann ferner ausgebildet sein, seine Viskosität unter Belastung zu verringern.

Bei einer besonders bevorzugten Ausführung der Erfindung ist das Schmiermittel ein Festschmiermittel. Beispielsweise kann das Schmiermittel Grafit und/oder Molybdändisulfid enthalten.

Somit lassen sich Schmiermittelverluste und/oder Verunreinigungen des Schmiermittels bei Nichtbenutzung des Werkzeugs, z. B. bei offenem Herumliegen des Werkzeugs auf einer Baustelle, reduzieren oder zur Gänze vermeiden.

Alternativ oder ergänzend kann dazu das Werkzeug auch eine, insbesondere reversibel öffenbare, Materialaufnahmeabdeckung zur, insbesondere bedarfsgerechten, Abdeckung der Materialaufnahme aufweisen. Die Materialaufnahmeabdeckung kann eine Hülse aufweisen und/oder als Hülse ausgebildet sein. Sie kann ausgebildet sein, die Materialaufnahme selbsttätig bei Nichtbenutzung des Werkzeugs abzudecken. Dazu kann die Materialaufnahmeabdeckung ein Rückstellfederelement aufweisen.

In den Rahmen der Erfindung fällt des Weiteren ein System, umfassend eine Werkzeugmaschine, insbesondere eine Handwerkzeugmaschine, beispielsweise eine Bohrhammermaschine, und ein erfindungsgemäßes Werkzeug. Bei einem solchen System können die Schmierung eines Kontaktbereichs zwischen einer Werkzeugaufnahme der Werkzeugmaschine und dem Einsteckabschnitt des Werkzeugs verbessert und auch Reibung beispielsweise durch in diesem Bereich befindliches Abriebmaterial, Aufwurfmaterial und/oder sonstiges Restmaterial verringert werden. Bei einem solchen System lässt sich somit der Verschleiß verringern, sodass eine besonders lange Nutzung ermöglicht wird.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigen, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- **Fig. 1**: ein System mit einer Werkzeugmaschine und einem in dieser aufgenommenen Werkzeug;
- **Fig. 2**: eine Querschnittsansicht einer Werkzeugaufnahme der Werkzeugmaschine mit einem darin aufgenommenen Einsteckabschnitt des Werkzeugs;
- **Fig. 3**: eine schematische Detailansicht eines Längsschnitts durch die Werkzeugaufnahme und dem darin aufgenommenen Einsteckabschnitt des Werkzeugs und
- **Fig. 4**: eine schematische Längsschnittansicht eines Werkzeugs mit einer Hülse.

Zur Erleichterung des Verständnisses der Erfindung werden nachfolgend für sich entsprechende Elemente jeweils die gleichen Bezugszeichen verwendet.

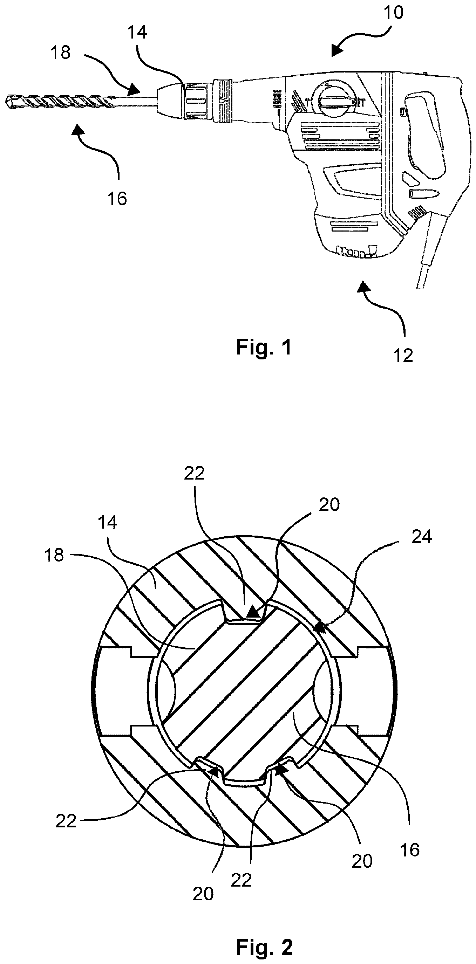

**Fig. 1** zeigt ein System **10,** umfassend eine Werkzeugmaschine **12,** insbesondere eine Handwerkzeugmaschine, beispielsweise eine Bohrhammermaschine, mit einer Werkzeugaufnahme **14,** in der ein Werkzeug **16,** beispielsweise ein Bohrer, aufgenommen ist. Dazu ist ein Einsteckabschnitt **18** des Werkzeugs 16 in die Werkzeugaufnahme 14 eingeführt.

**Fig. 2** zeigt eine Querschnittsansicht der Werkzeugaufnahme 14 und dem in dieser mit seinem Einsteckabschnitt 18 aufgenommenen Werkzeug 16.

Der Einsteckabschnitt 18 weist umfangsseitig drei Nuten **20** auf. Diese sind einem Y entsprechend angeordnet. Sie bilden einen Y-förmigen Anschlussbereich des Einsteckabschnitts 18. Komplementär zu den Nuten 20 weist die Werkzeugaufnahme 14 Stege **22** auf. Insbesondere mittels der Stege 22 und der Wände der Nuten 20 können Drehmomente zwischen der Werkzeugaufnahme 14 und dem Werkzeug 16 übertragen werden.

Der Einsteckabschnitt 18 und damit das Werkzeug 16 sind senkrecht zur Bildebene der Fig. 2 relativ zur Werkzeugaufnahme 14 verlagerbar. Somit kann das Werkzeug 16 sowohl in der Bildebene rotatorisch als auch senkrecht zur Bildebene translatorisch, insbesondere hämmernd, durch die Werkzeugmaschine 12 (Fig. 1) angetrieben werden.

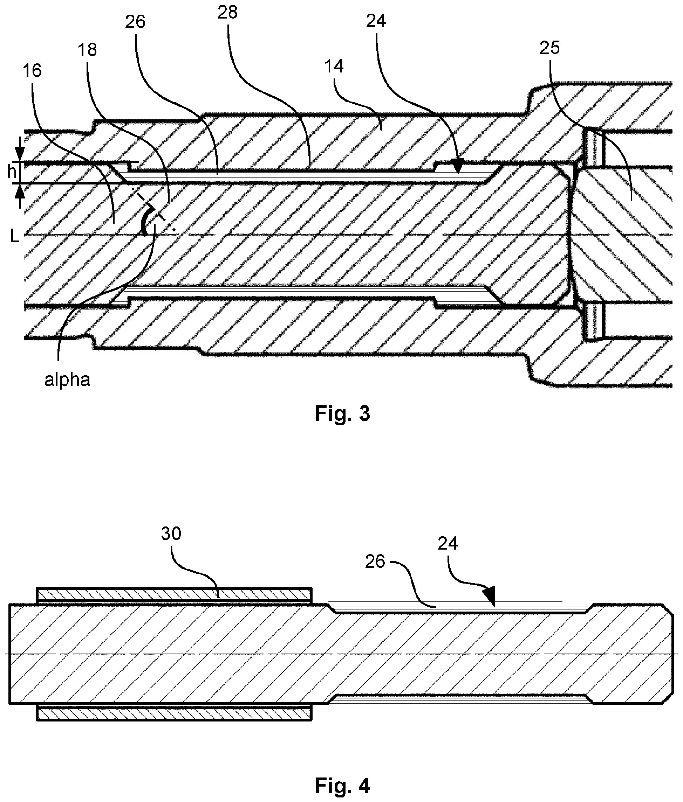

Am Einsteckabschnitt 18 ist eine Materialaufnahme **24** ausgebildet, die insbesondere anhand der nachfolgenden **Fig. 3** näher erläutert wird.

Dazu zeigt Fig. 3 einen vergrößerten, nicht maßstäblich abgebildeten Ausschnitt eines Längsschnitts durch die Werkzeugaufnahme 14 und dem darin aufgenommenen Einsteckabschnitt 18. Insbesondere ist die Materialaufnahme 24 relativ zu den übrigen dargestellten Elementen nicht maßstabsgetreu abgebildet.

Die Materialaufnahme 24 ist als Ausnehmung außenseitig des Einsteckabschnitts 18 des Werkzeugs 16 ausgebildet. Insbesondere ist sie radial umlaufend am Einsteckabschnitt 18 ausgebildet. Denkbar ist, dass die Materialaufnahme 24 alternativ in mehrere, vorzugsweise höchstens fünf, voneinander getrennte Abschnitte aufgeteilt ausgebildet ist. Vorzugsweise können diese Abschnitte dann jeweils in einer Drehrichtung während eines Betriebs der Werkzeugmaschine 12 (Fig. 1) an die Nuten 20 (Fig. 2) des Einsteckabschnitts 18 angrenzend ausgebildet sein.

Ein Döpper **25** der Werkzeugmaschine 12 grenzt in der in Fig. 3 gezeigten Stellung an den Einsteckabschnitt 18 an. Die Werkzeugmaschine 12 befindet sich in ihrer Arbeitsposition.

Der Einsteckabschnitt 18 kann einen Durchmesser von beispielsweise 18 mm aufweisen. Der Durchmesser des Einsteckabschnitts 18 kann insbesondere kleiner als 3 cm sein.

Die Materialaufnahme 24 weist eine maximale Tiefe **h** von 0,5 mm auf.

In der Materialaufnahme 24 befindet sich ein Schmiermittel **26.** Das Schmiermittel 26 ist ein Festschmiermittel, das Molybdändisulfid und/oder Grafit enthalten kann. Bei alternativen Ausführungsformen der Erfindung ist auch ein anderes Schmiermittel, insbesondere ein temperaturbeständiges und/oder ein druckresistentes Schmiermittel, beispielsweise in Form eines Fettes, denkbar.

Zu erkennen ist ferner eine Räumkante **28,** die innenseitig der Werkzeugaufnahme 14 von dieser abragt. Sie ist aus Darstellungsgründen vergrößert und relativ zu den übrigen in Fig. 3 dargestellten Elementen ebenfalls nicht maßstabsgetreu abgebildet. Die Räumkante 28 kann fertigungsbedingt ausgebildet sein. Denkbar ist insbesondere, dass die Werkzeugaufnahme 14 durch Vorbohren eines im Wesentlichen zylindrischen Werkstückes und einer anschließenden Räumoperation mittels einer Räumnadel zur Ausbildung der notwendigen Verzahnungsgeometrie, insbesondere der Stege 22 (Fig. 2), gefertigt ist.

Die Räumkante 28 kann radial geringfügig in die Materialaufnahme 24 und/oder in das Schmiermittel 26 hineinragen.

Innerhalb des Werkzeugs 16 und insbesondere innerhalb des Einsteckabschnitts 18 ist die Materialaufnahme 24 derart angeordnet, dass sie zumindest in der in Fig. 3 dargestellten Arbeitsposition der Werkzeugmaschine 12 entlang einer Längsachse **L** des Werkzeugs 16 bzw. des Einsteckabschnitts 18 beidenends die Räumkante 28 überragt. Ihre Gestalt, insbesondere ihre Größe und ihre Position relativ zum übrigen Werkzeug 16, ist ferner derart ausgebildet, dass die Materialaufnahme 24 bei Betrieb der Werkzeugmaschine 12 die Werkzeugaufnahme 14 nicht verlässt.

Die Materialaufnahme 24 kann eine Länge zwischen 4 cm und 8 cm, beispielsweise 5 cm bis 6 cm, aufweisen. Ihre Endbereiche entlang der Längsachse L sind jeweils mit einer Fase ausgebildet. Ein Winkel **alpha** der Fasen, der beispielhaft für eine der beiden Fasen in Fig. 3 markiert ist, beträgt jeweils 45° gegen die Längsachse L.

Die Materialaufnahme 24 überragt die Räumkante 28 in der in Fig. 3 dargestellten Arbeitsposition beidenends beispielsweise um wenigstens 0,5 cm. Der Abstand der Endbereiche der Materialaufnahme 24 von der Räumkante 28 kann auf der gemäß Fig. 3 linken und der rechten Seite der Räumkante gleich sein. In der in Fig. 3 gezeigten Stellung sind die Abstände unterschiedlich lang.

Abschließend zeigt **Fig. 4** einen schematischen Längsschnitt durch ein weiteres Werkzeug 16, das, soweit nachfolgend nicht anders beschrieben, dem vorangehend beschriebenen Werkzeug 16 entspricht. Zur Vereinfachung sind in Fig. 4 lediglich die im Folgenden besonders wesentlichen Merkmale dieses Werkzeugs 16 abgebildet.

Zu erkennen ist wiederum eine Materialaufnahme 24. In der Materialaufnahme 24 ist wiederum ein Schmiermittel 26 aufgenommen.

In Fig. 4 ist wiederum die Materialaufnahme 24 aus Darstellungsgründen vergrößert und relativ zu den übrigen Elementen des Werkzeugs 16 nicht maßstabsgetreu abgebildet.

Eine Besonderheit dieser Ausführungsform des Werkzeugs 16 ergibt sich in Form einer Materialaufnahmeabdeckung **30.** Die Materialaufnahmeabdeckung 30 umschließt das Werkzeug 16 teilweise. Sie ist dazu als Hülse ausgebildet.

Die Materialaufnahmeabdeckung 30 ist entlang des Werkzeugs 16 verschiebbar angeordnet. Insbesondere lässt sie sich über die Materialaufnahme 24 und damit über das Schmiermittel 26 schieben. Sie kann auch von der Materialaufnahme 24 weggeschoben werden, sodass die Materialaufnahme 24 und das darin befindliche Schmiermittel 26 freigebbar sind. Die Materialaufnahmeabdeckung 30 ist somit reversibel öffenbar. Denkbar ist, dass die Materialaufnahmeabdeckung 30 ein Rückstellfederelement (in Fig. 4 nicht dargestellt) aufweist, sodass die Materialaufnahme 24 selbsttätig abgedeckt ist, sobald das Werkzeug 16 der Werkzeugaufnahme 14 (Fig. 1) entnommen wird.

### Bezugszeichenliste

- 10: System
- 12: Werkzeugmaschine
- 14: Werkzeugaufnahme
- 16: Werkzeug
- 18: Einsteckabschnitt
- 20: Nut
- 22: Steg
- 24: Materialaufnahme
- 25: Döpper
- 26: Schmiermittel
- 28: Räumkante
- 30: Materialaufnahmeabdeckung
- alpha: Winkel
- h: Tiefe
- L: Längsachse

## Patentansprüche

1. **Werkzeug** (16), beispielsweise ein Bohrwerkzeug, ein Bohrmeißelwerkzeug und/oder ein Meißelwerkzeug, umfassend einen Einsteckabschnitt (18) zur Aufnahme des Werkzeugs (16) in einer Werkzeugaufnahme (14) einer Werkzeugmaschine (12), insbesondere einer Handwerkzeugmaschine, wobei der Einsteckabschnitt (18) wenigstens eine Nut (20) aufweist,
**dadurch gekennzeichnet,**
**dass** am Einsteckabschnitt (18) wenigstens eine Materialaufnahme (24) ausgebildet ist.

2. Werkzeug nach Anspruch 1, **dadurch gekennzeichnet, dass** die Materialaufnahme (24) radial umlaufend oder zumindest abschnittsweise und gleichmäßig über einen Umfang des Einsteckabschnitts (18) verteilt am Einsteckabschnitt (18) ausgebildet ist.

3. Werkzeug nach einem der vorhergehenden Ansprüche, **dadurch gekennzeichnet, dass** in der Materialaufnahme (24) ein Schmiermittel (26) aufgenommen ist und/oder dass die Materialaufnahme (24) eingerichtet ist, ein Schmiermittel (26) aufzunehmen.

4. Werkzeug nach einem der vorhergehenden Ansprüche, **dadurch gekennzeichnet, dass** die Materialaufnahme (24) als Ausnehmung am Werkzeug (16) ausgebildet ist.

5. Werkzeug nach einem der vorhergehenden Ansprüche, **dadurch gekennzeichnet, dass** die Materialaufnahme (24) eine maximale Tiefe (h) von höchstens 0,5 mm, vorzugsweise eine maximale Tiefe (h) im Bereich von 0,05 mm 0,5 mm, aufweist.

6. Werkzeug nach einem der vorhergehenden Ansprüche, **dadurch gekennzeichnet, dass** wenigstens einer der entlang einer Längsachse (L) des Werkzeugs befindlichen Endbereiche der Materialaufnahme (24) eine Fase, vorzugsweise mit einem Winkel (alpha) zwischen 30° und 60° gegen die Längsachse (L), besonders bevorzugt mit einem Winkel (alpha) von 45°, aufweist.

7. Werkzeug nach einem der vorhergehenden Ansprüche, **dadurch gekennzeichnet, dass** die Gestalt der Materialaufnahme (24) derart ausgebildet ist, dass die Materialaufnahme (24) bei Betrieb der Werkzeugmaschine (12) die Werkzeugaufnahme (14) der Werkzeugmaschine (12), in der das Werkzeug (16) aufgenommen ist, nicht verlässt.

8. Werkzeug nach einem der vorhergehenden Ansprüche, **dadurch gekennzeichnet, dass** die Materialaufnahme (24) eingerichtet ist, eine Räumkontur (28) der Werkzeugaufnahme (14), in der das Werkzeug (12) aufgenommen ist, entlang der Längsachse (L) wenigstens einenends, vorzugsweise beidenends, zumindest wenn sich die Werkzeugmaschine (12) in ihrem Arbeitspunkt befindet, zu überragen.

9. Werkzeug nach einem der vorhergehenden Ansprüche, **dadurch gekennzeichnet, dass** der Einsteckabschnitt (18) einen Y-förmigen Anschlussbereich aufweist.

10. Werkzeug nach einem der vorhergehenden Ansprüche, **dadurch gekennzeichnet, dass** das Schmiermittel (26) ein Festschmiermittel ist.

11. Werkzeug nach einem der vorhergehenden Ansprüche, **dadurch gekennzeichnet, dass** das Werkzeug (16) eine, insbesondere reversibel öffenbare, Materialaufnahmeabdeckung (30) aufweist.

12. **System** (10), umfassend eine Werkzeugmaschine (12), beispielsweise eine Bohrhammermaschine, und ein Werkzeug (16) nach einem der vorhergehenden Ansprüche.
